# EUROPEAN PATENT APPLICATION

(11) **EP 1 530 135 A2**
(43) Date of publication of application: **11.05.2005**
(21) Application number: 04256592.9
(22) Date of filing: 26.10.2004
(51) Int. Cl.: G06F 17/30

(54) **Data processing method, data processing apparatus, storage medium and program**

(30) Priority: 27.10.2003 JP 2003366313
(71) Applicant: CANON KABUSHIKI KAISHA, Ohta-ku, Tokyo (JP)
(72) Inventor: Fukada, Toshiaki c/o Canon Kabushiki Kaisha, Ohta-ku, Tokyo (JP); Komori, Yasuhiro c/o Canon Kabushiki Kaisha, Ohta-ku, Tokyo (JP)
(74) Representative: Beresford, Keith Denis Lewis

(57) **Abstract**

The present invention is purposed to improve user friendliness in generation of practical data access means. To achieve this object, the present invention provides a data processing method of registering a path for data access and link data for the path. The method comprises: a generation step of the link data candidate generation unit 202 for generating a link data candidate based on a file accessed from the path which is inputted for data access; a display step of the link data candidate exhibiting unit 203 for displaying the generated link data candidate; a recognition step of the link data selection unit 204 for recognizing link data selected from the displayed link data candidate; and a registration step of the link data registration unit 205 for registering the recognized link data in association with the path of the accessed file.

## Description

### FIELD OF THE INVENTION

The present invention relates to link-data registration processing which enables easy data access to a URL, a file, or a directory.

### BACKGROUND OF THE INVENTION

Along with the development of the Internet technology and a large-capacity storage, the amount of information handled by individuals is increasing. As a result, problems, e.g., not being able to find desired information or a time-consuming process to reach desired information, arise. Therefore, there are increasing demands for data access means that enables efficient data access.

For instance, according to a browser for browsing a content of the Internet on a computer, registering a URL (path) and a corresponding tag name (link data) in a module called "bookmark" or "my favorite" enables a user to easily access the content designated by the URL by clicking the tag name without inputting the URL.

Furthermore, to access a desired file or directory stored in a deep hierarchical structure of a computer memory or to access a drive allocated to a peripheral device such as a computer or printer connected to a network, a shortcut (link data) is generated in a directory that is convenient for a user by a method such as "link" or "shortcut", and as a result, the user is able to access the desired file or directory by simply double-clicking the shortcut without tracking the hierarchical structure.

Meanwhile, various proposals have been made on an efficient generation method of data access means. For instance, for a method of generating web access means using speech recognition, Japanese Patent Application Laid-Open (KOKAI) No. 2002-41081 discloses a method that analyzes a web-page content tag and generates web access means by automatically combining speech recognition grammar in various manners.

Furthermore, Japanese Patent Application Laid-Open (KOKAI) No. 9-162966 discloses a method for a speech dial device, which prompts a user to input a name of a caller so as to enable speech input of the name of a high-frequency dial transmission. According to this method, the system automatically prompts a user to register link data for the frequently accessed path, enabling efficient generation of data access means.

However, the aforementioned Japanese Patent Application Laid-Open (KOKAI) No. 2002-41081 has the following problems. Since each system has as its inside information various combinations of words that are assumed to be vocalized by users, a user has no way of knowing what to vocalize. Furthermore, in order to accept various speeches, it is necessary to prepare plural words and word strings for one path. If the number of registered paths increases, the number of vocabularies subjected to recognition becomes enormous, and as a result, practical speech recognition performance may not be achieved.

Moreover, the aforementioned Japanese Patent Application Laid-Open (KOKAI) No. 9-162966 has the following problem. In a case where a user key-inputs a name corresponding to a telephone number as character data, it is difficult to perform the input from a small device, e.g., a telephone set, and it lacks convenience.

Besides, there are various problems in generating data access means. For instance, normally a tag name or a shortcut name for a URL is uniquely determined by a system. To change the name, a user must perform input from a keyboard. Furthermore, under one hierarchy, a user cannot set plural tags or shortcuts having the same name even if they have different paths. Still further, a user must always input character data, and is unable to set link data by image data only such as an icon. Moreover, a user cannot set link data by sound. As described above, the conventional data access means generation has various problems in terms of convenience and functionality.

### SUMMARY OF THE INVENTION

The present invention has been proposed in view of the above-described problems, and the first aim of the invention is to improve user friendliness in practical generation of data access means. Moreover, the second aim is to achieve highly functional generation of data access means.

In order to achieve the above aims, the data processing method according to one embodiment has the following configuration. More specifically, a data processing method of registering a path for data access and link data for the path, characterized by comprising:
a link data candidate generation step of generating a link data candidate based on an object accessed from the inputted path for data access;
a display control step of controlling to display the generated link data candidate; and
a registration step of registering link data, selected from the displayed link data candidate, in association with the path of the accessed object.

According to this embodiment, it is possible to improve user friendliness in practical generation of data access means. Furthermore, it is possible to achieve highly functional generation of data access means.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a block diagram showing a hardware construction of a data processing apparatus which realizes a data processing method (data registration method) according to the first embodiment of the present invention;
Fig. 2 is a block diagram showing a module construction of a control program which realizes the data registration method according to the first embodiment of the present invention;
Fig. 3 is a view showing a display example of an HTML content constructed with text data only;
Fig. 4 is a view showing an HTML source file of Fig. 3;
Fig. 5 is a view showing an example of link data candidates exhibited to a user, obtained by performing structural analysis and text analysis on the HTML source file shown in Fig. 4;
Fig. 6 is a view showing a display example of an HTML document constructed with text data and image data;
Fig. 7 is a view showing an HTML source file of Fig. 6;
Fig. 8 is a view showing an example of link data candidates exhibited to a user, obtained by performing structural analysis, text analysis and image analysis on the HTML source file shown in Fig. 7;
Fig. 9 is a view showing a display example of an HTML document constructed with text data and link data of sound data;
Fig. 10 is a view showing an HTML source file of Fig. 9;
Fig. 11 is a view showing an example of link data candidates exhibited to a user, obtained by performing structural analysis, text analysis and sound analysis on the HTML source file shown in Fig. 10;
Fig. 12 is a view showing an example of a directory and a file included therein;
Fig. 13 is a view showing an example of link data candidates exhibited to a user, which are generated for the directory and file shown in Fig. 12;
Fig. 14 is a block diagram showing a module construction of a control program which realizes a data registration method according to the seventh embodiment of the present invention, showing a case of obtaining how-to-read data of the link data to be exhibited to a user by employing a text-speech synthesizing function at the time of generating link data candidates;
Fig. 15 is a block diagram showing a module construction of a control program which realizes a data registration method according to the seventh embodiment of the present invention, showing a case of obtaining link data pronunciation data for speech recognition at the time of employing speech recognition in data access;
Fig. 16 is a block diagram for performing data access employing registered link data and its path;
Fig. 17 is a view showing an example of link data exhibited to a user by the registered link data exhibiting unit shown in Fig. 16;
Fig. 18 is a block diagram for performing data access using a speech synthesizing function and a speech recognition function;
Fig. 19 is a table showing an example of link data and a data content of the path;
Fig. 20 is a table showing an example of link data and a data content of the path when speech synthesis is performed at the time of link data selection;
Fig. 21 is a table showing an example of link data and a data content of the path when link data is selected by speech recognition;
Fig. 22 is a table showing an example of link data having various link types and a data content of the path;
Fig. 23 is a table showing an example of link data having the same or similar information and a data content of the path;
Fig. 24 is a view showing an example of how to exhibit link data to a user when the user selects link data having the same information;
Fig. 25 is a view showing an example of how to exhibit link data to a user when the user selects link data having similar information; and
Fig. 26 is a block diagram for performing data registration in a case where a path is accessed a predetermined number of times or more.

### DETAILED DESCRIPTION OF THE PREFERRED EMBODIMENTS

Preferred embodiments of the present invention will now be described in detail in accordance with the accompanying drawings.

According to the present invention, it is possible to improve user friendliness in practical generation of data access means. Furthermore, it is possible to generate highly functional data access means.

Hereinafter, preferred embodiments of the present invention are described with reference to the accompanying drawings. Note in the description, meanings of respective terms are defined as follows. More specifically, an "object" means a function that constitutes one conceptual group. In this invention, an "object" is a concept that includes a content designated by a URL, a file generated by an application software, and a directory indicative of a file storage destination. Furthermore, a "path" generally means a method of indicating a position of a file or folder (directory) in the UNIX (registered trademark), MS-DOS, Windows (registered trademark) and the like. In this invention, in a case where an access target is an Internet content, assume that the URL is also included in the "path". Furthermore, the "link data" indicates a shortcut icon or the like in a case where the access target is a file or a directory, and indicates a tag name or the like in a case where the access target is a content. The "link data" has a function for automatically accessing the link destination when a user selects the link data on a screen.

### [First Embodiment]

### <Hardware Construction>

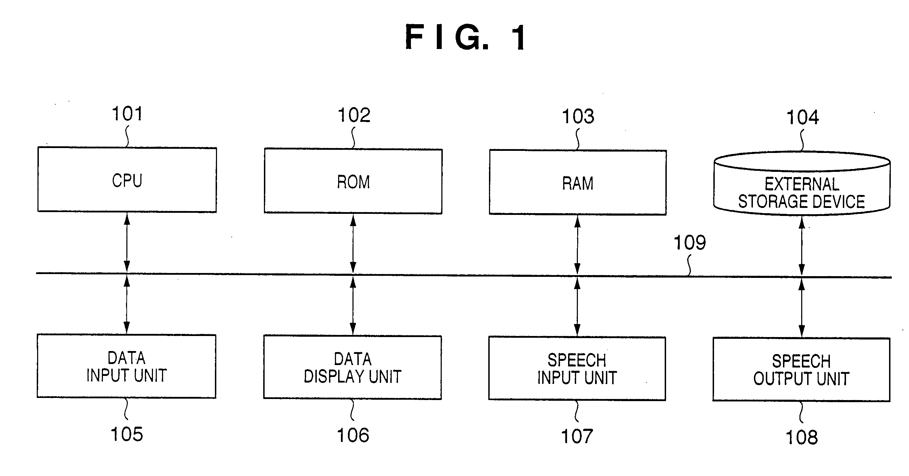

Fig. 1 is a block diagram showing a hardware construction of a data processing apparatus which realizes a data processing method (data registration method) according to the first embodiment of the present invention. Numeral 101 denotes a CPU. By executing a control program stored in ROM 102 or a control program loaded from an external storage device 104 to RAM 103, the data registration method according to the first embodiment is realized.

The ROM 102 stores various parameters and a control program executed by the CPU 101. The RAM 103 provides a working area when the CPU 101 executes various controlling, and stores a control program executed by the CPU 101. Numeral 104 denotes an external storage device, e.g., a hard disk, floppy (registered trademark) disk, CD-ROM, DVD-ROM, memory card and the like. In a case where a hard disk serves as the external storage device 104, the hard disk stores various programs installed from CD-ROM, floppy (registered trademark) disk or the like.

Numeral 105 denotes a data input unit, e.g., a touch panel, buttons, a pen, a pad for inputting a handwritten character, a mouse, a keyboard, a barcode and so on. Numeral 106 denotes a data display unit, e.g., a CRT, a liquid crystal display, a touch panel or the like, for displaying or outputting data such as characters and images. Numeral 107 denotes a speech input unit, e.g., a microphone or the like, for performing data access by speech recognition or performing device operation by speech. Numeral 108 denotes a speech output unit, e.g., a speaker or the like, for performing data notification to a user. Numeral 109 denotes a bus connecting the above-described respective units.

### <Processing for Registration>

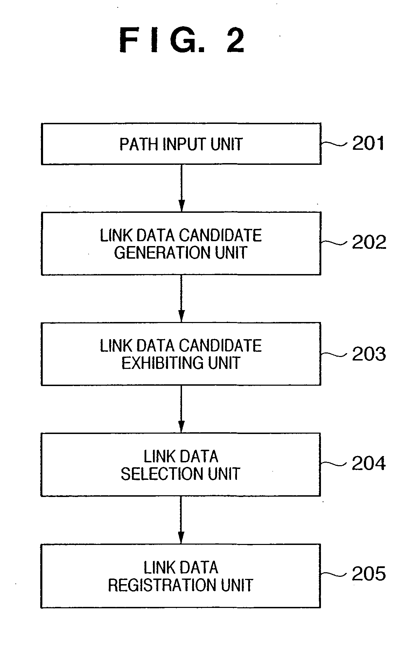

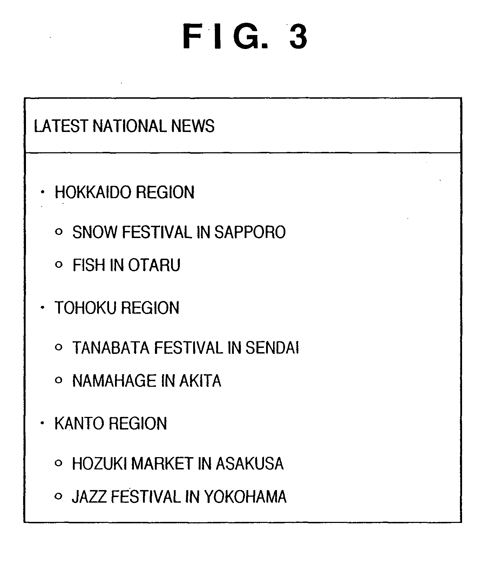

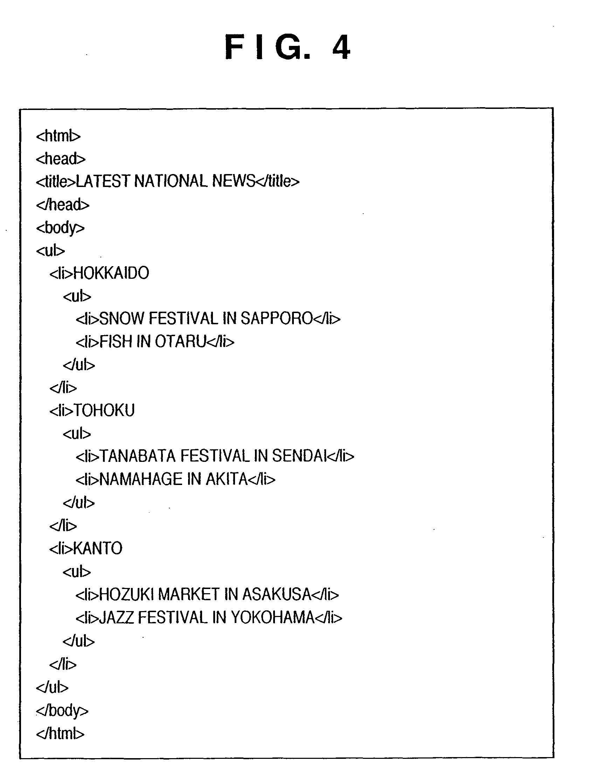

Fig. 2 is a block diagram showing a module construction of a control program which realizes the data registration method according to the first embodiment of the present invention. Hereinafter, a description is provided on an HTML document designated by a URL which is a data access path. An example of the HTML document designated by a path, which is displayed by a program such as a browser is shown in Fig. 3, and a source file of the HTML document is shown in Fig. 4.

In a path input unit 201, the URL designated by a user is recognized. The URL is designated by one of or any arbitrary combination of a keyboard, a mouse, a button, a pen, handwritten characters, speech, a barcode, and a touch panel from the data input unit 105 and speech input unit 107.

Next, in a link data candidate generation unit 202, structural analysis and text analysis are performed on the HTML document source file, and a link data candidate is generated. For an example of structural analysis, tag data of the HTML is removed to extract the text such as "Latest National News", "Hokkaido", "Snow Festival in Sapporo" and "Fish in Otaru".

Next, text analysis is performed on these text data. First, morphological analysis is applied to divide the text into words. By the analysis, the texts are divided into, for instance, " 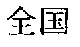 (national) 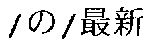 (latest) 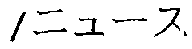 (news)", " 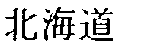 (Hokkaido)", " 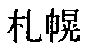 (Sapporo)/ 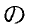 (in) 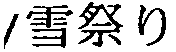 (snow festival)" and " 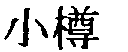 (Otaru)/ 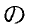 ) (in)/ 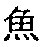 (fish)" ("/" is a symbol indicative of word segmentation).

Next, in addition to each text, a word string or a partial word string is generated. For instance, with respect to the text " 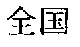 (national)/ 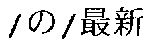 (latest ) 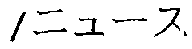 (news)", word strings or partial word strings such as " 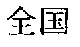 (national)", " 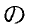 " " 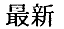 (latest)", 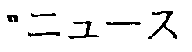 (news)", 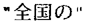 , 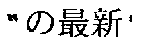 , 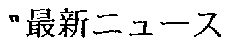 (latest news)", 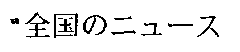 (national news)" and so on can be generated as the link data candidates in addition to 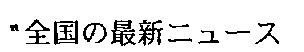 (Latest National News)". Herein, the candidates are narrowed down by candidate screening, such as likelihood of the word string, character number limitation, word frequency and so forth. To obtain likelihood of the word string, for instance, a method based on the language likelihood using the well-known Word bi-gram can be used. Similarly with regard to the text such as "snow festival in Sapporo" and "fish in Otaru," candidates of word strings or partial word strings are generated.

Herein, it is preferable to limit the number of link data candidates for a path to a predetermined number or less. For this reason, it is preferable to control that a predetermined number of word strings be selected in order of highest likelihood. The selection criterion can be changed in accordance with the HTML tag attribute. For instance, it is highly likely that the portion between the title tags (between "<title>" and "</title>") appropriately expresses the content of the HTML document (contents). Therefore, assuming that the number of link data candidates obtained by performing structural analysis and text analysis on the XTML document is, e.g., six, it may be controlled to generate four candidates from the title-tag texts and two candidates from other texts.

Further, it is possible to generate link data candidates employing the user's use state, indicative of the use state of the user's device accessing the path. The user's use state includes a date of access, time, time of the day such as morning, afternoon and night, time data such as a day of the week, position data at the time of access, user's ID, and so forth. Assuming that the time at which a user accesses the XTML document is "the morning on December 25" and the position data at the time of access is the area of "Tokyo station", these data can be used as link data candidates.

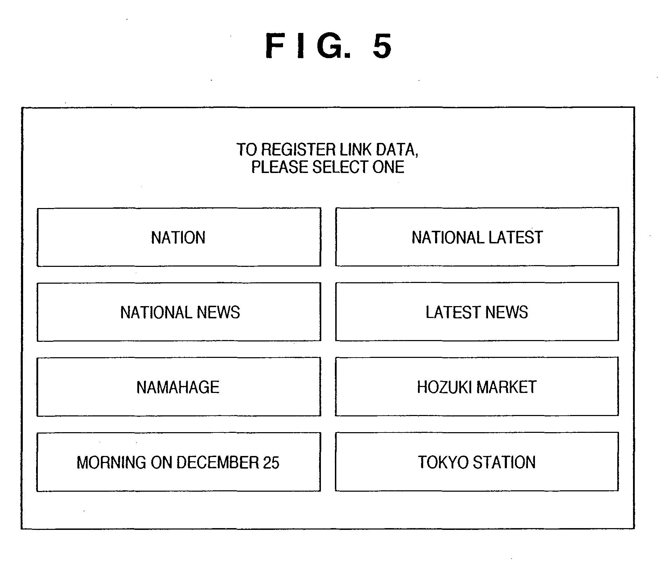

Next, in a link data candidate exhibiting unit 203, the link data candidates for the HTML source file obtained in the above-described manner are exhibited to the user. An example is shown in Fig. 5. Exhibiting the link data candidates is performed by one of or any arbitrary combination of a CRT, a liquid crystal panel, and speech output from the data display unit 106 and speech output unit 108.

Next, a link data selection unit 204 recognizes one link data selected by the user from the link data candidates exhibited by the data candidate exhibiting unit 203. The selection is made by one of or any arbitrary combination of a keyboard, a mouse, a button, a pen, speech, and a touch panel from the data input unit 105 and speech input unit 107.

At last, a link data registration unit 205 registers the link data selected by the user from the link data selection unit 204 and the path of the link data.

### <Access Processing>

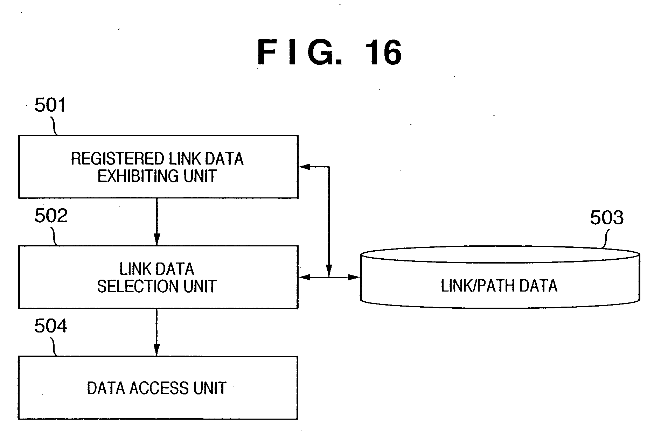

A block diagram of a data processing apparatus which performs data access employing the link data and its path registered in the above-described processing is shown in Fig. 16. Numeral 501 denotes a registered link data exhibiting unit, which extracts link data from a link/path data storage 503 storing link data registered so far and its path data, and exhibits the extracted data to a user.

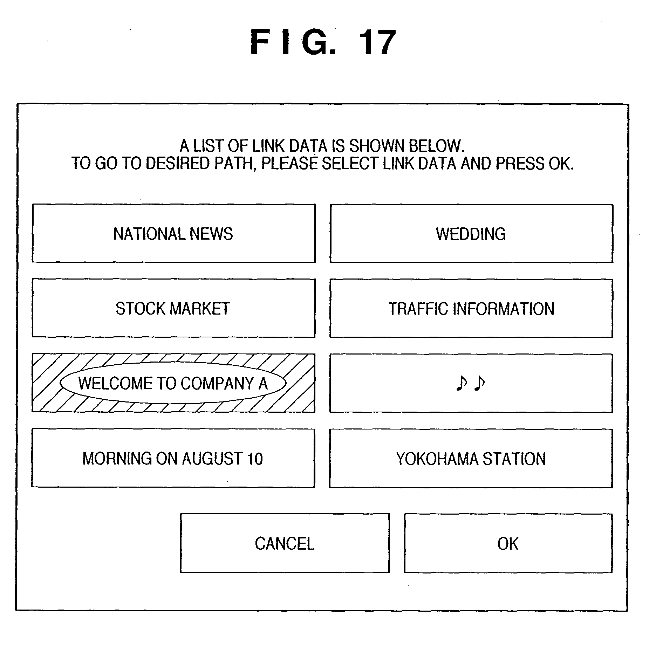

An example of link data exhibited to the user by the registered link data exhibiting unit 501 is shown in Fig. 17. In correspondence to the case where a user selects "National News" in Fig. 5, link data "National News" is exhibited in Fig. 17. Numeral 502 denotes a link data selection unit which selects desired link data from Fig. 17. Path data corresponding to the selected link data is extracted from the link/path data storage 503, and a data access unit 504 performs data access to the extracted path.

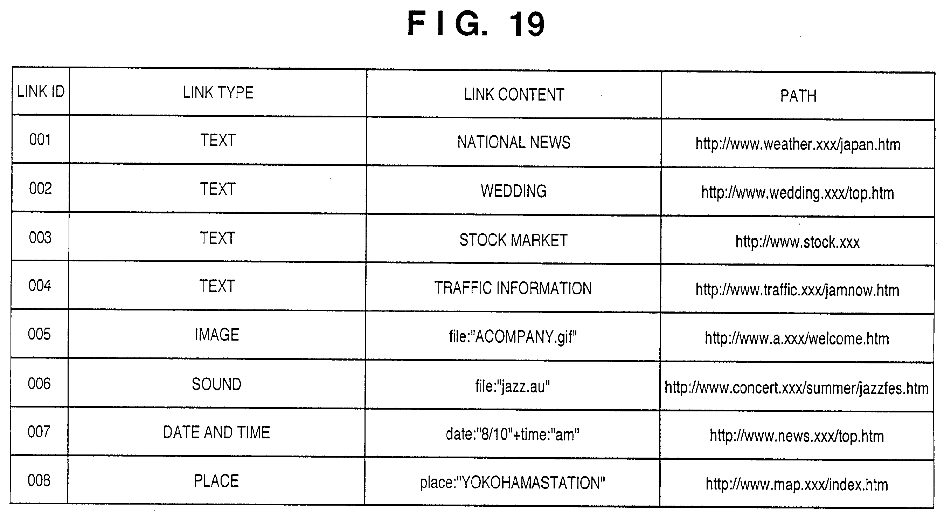

An example of link data and its path data stored in the link/path data storage 503 in the example of Fig. 17 is shown in Fig. 19. The first column shows link IDs for managing the link/path data. The second column shows link types indicative of the type of link data. "Text" means that the link data is generated from a text portion of a XHML document as in the above example.

Similarly, "image" and "sound" means that the link data is generated from an image portion or a sound portion of a XHML document (details will be described later). Further, "date", "time" and "place" means that the link data is generated from information regarding date, time and place as the use state of the user's device. The third column shows contents of the link. In a case where the link type is a text, the text is shown. In a case where the link type is an image or sound, the file name is shown. In a case where the link type is the date, time or place, the portion storing the data is shown. The fourth column shows path data corresponding to the link. In this example, URL path data is shown. For instance, when the user selects "National News" in Fig. 17, the corresponding path http://www.weather/xxx/japan.htm is extracted, and the data access unit 504 accesses data corresponding to the URL.

As is apparent from the above description, according to the first embodiment, plural types of candidates are exhibited to a user for link data corresponding to the path inputted by the user, and the user can select one from the candidates to register the path and corresponding link data. Therefore, a user, who is unable to perform keyboard input or a user who uses a device not having a keyboard or a device in which input operation is difficult, can register link data by a convenient method in accordance with the user's preference. As a result, it is possible to improve user friendliness while achieving practicality.

### [Second Embodiment]

In the first embodiment, the HTML document only includes text data. However, the HTML document may include a link to image data. In this case, the image in the link destination is subjected to image analysis, and the obtained image data is used as a link data candidate. Various methods may be considered for the image analysis. For instance, in a case where the image data in the link destination is a still image, it is subjected to image-format conversion or size conversion so as to be exhibited by the link data candidate exhibiting unit 203 or registered link data exhibiting unit 501.

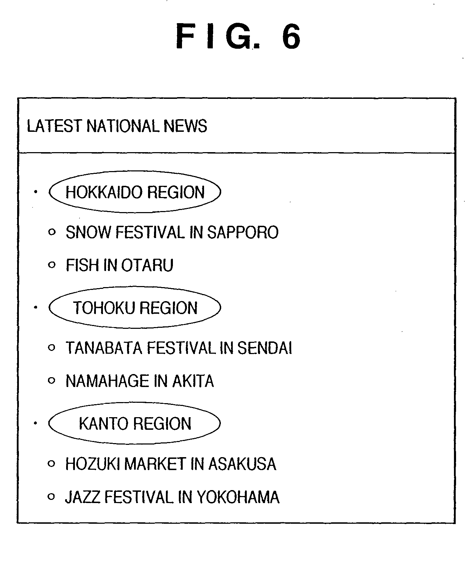

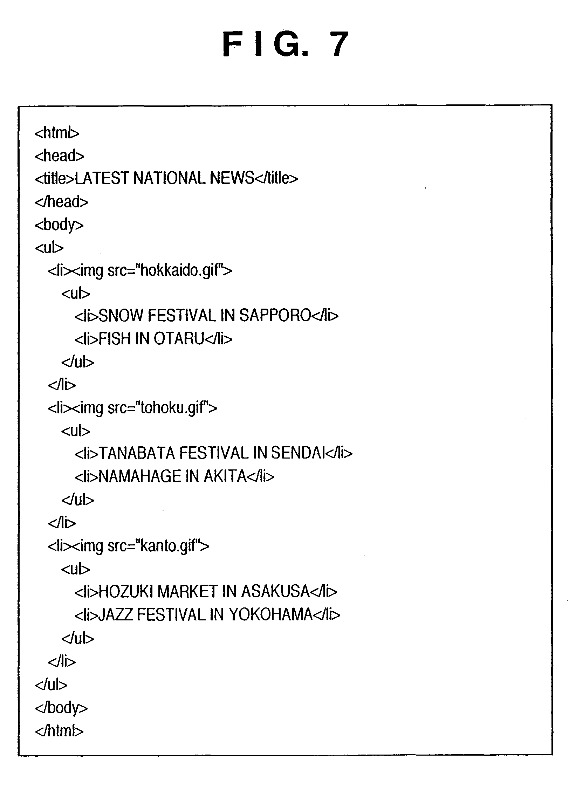

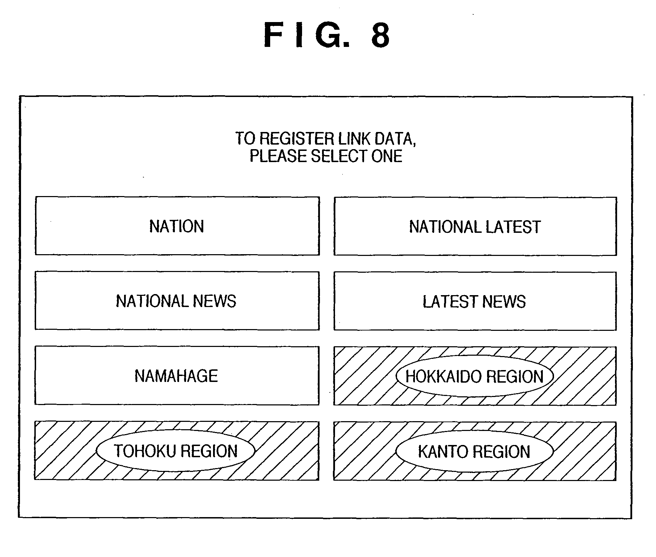

In a case where the image data in the link destination is a moving image, image data obtained by, e.g., converting the first frame of the moving image into a still image, converting the most characteristic scene of the moving image into a still image, or extracting the entire or a part of the moving image as moving-image data, can be used as a link data candidate. Fig. 6 shows a display example of an HTML document constructed with text data and image data; Fig. 7 shows an HTML source file of the HTML document; and Fig. 8 shows an example of link data candidates exhibited to a user, obtained by performing structural analysis, text analysis and image analysis on the HTML source file shown in Fig. 7.

In Fig. 7, the portions <img src="hokkaido.gif">, <img src="tohoku.gif">, and <img src="kanto.gif"> are the GIF-form image data regarding Hokkaido, Tohoku, and Kanto regions. Assuming that these three image data are selected as a part of link data candidates, the link data candidate exhibiting unit 203 exhibits the candidates as shown in Fig. 8. To the link data candidates obtained respectively from text analysis, image analysis and user's use information, a predetermined rule, e.g., giving priority in order of image analysis, text analysis, and user information, may be applied. The example of link ID 005 in Fig. 19 shows a case where image data is selected as link data. In this example, the content of the link is not the image data itself, but the location where the image data exists (file: "A company.gif") is stored.

As is apparent from the above description, in a case where an HTML document includes a link to image data, the image data is exhibited to a user as a link data candidate, and when the user selects the image data as link data, the location where the image data exists is registered as link data in association with the path data of the HTML document. In this manner, according to the second embodiment, link data can be set by image data, and highly functional data access means can be generated.

### [Third Embodiment]

In the first embodiment, the HTML document only includes text data. However, the HTML document may include a link to sound data. In this case, the sound in the link destination is subjected to sound analysis, and the obtained sound data is used as a link data candidate. Various methods may be considered for the sound analysis. For instance, the sound data is converted to a sound format that can be reproduced by the link data candidate exhibiting unit 203 or registered link data exhibiting unit 501 (e.g., conversion from MP3 to PCM or conversion of a sampling rate).

Besides, sound data obtained by, e.g., extracting a predetermined interval or a predetermined number of bytes of sound data from the beginning, or extracting the most characteristic portion of the sound data, can be used as a link data candidate. Furthermore, by identifying the type of sound using a technique such as an auditory scene analysis, or by performing speech recognition on the speech portion of the sound data, the sound data can be converted to text data, and the text data can be used as a character string for generating a link data candidate using the method described in the first embodiment or a similar method.

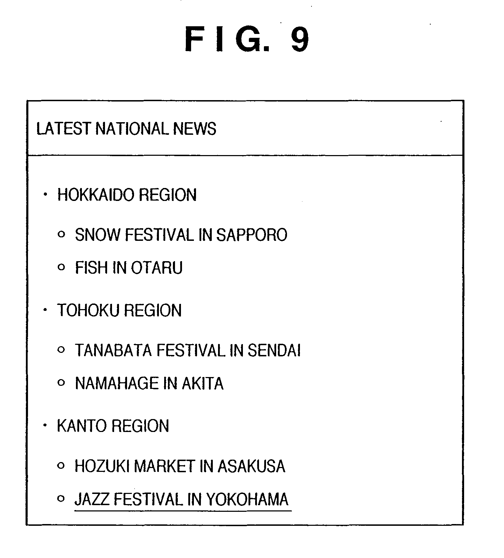

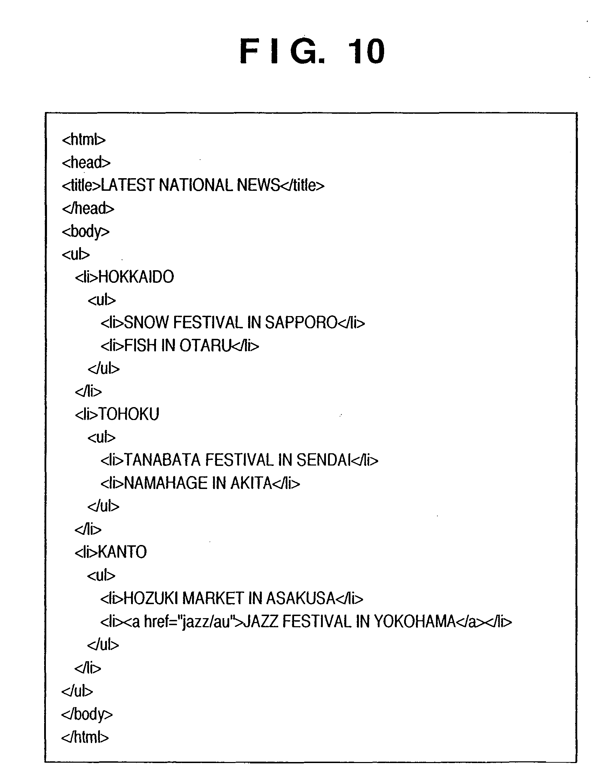

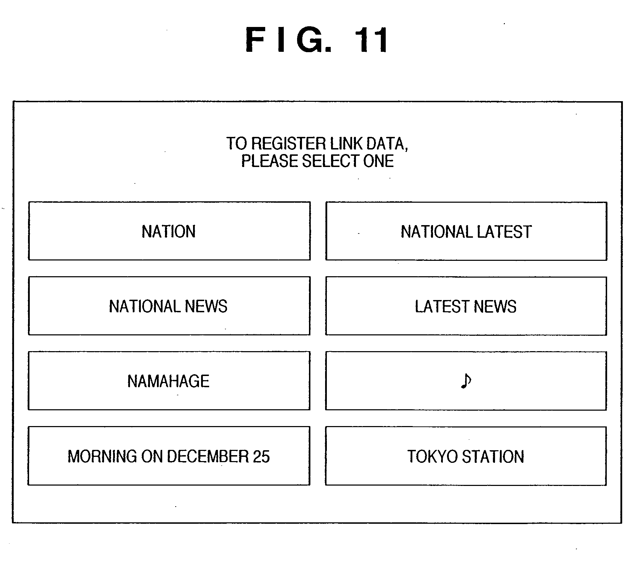

Fig. 9 shows a display example of an HTML document constructed with text data and link data of sound data; Fig. 10 shows an HTML source file of the HTML document; and Fig. 11 shows an example of link data candidates exhibited to a user, obtained by performing structural analysis, text analysis and sound analysis on the HTML source file shown in Fig. 10.

In Fig. 10, the portion <a href="jazz.au"> is the sound data linked to the text data "jazz festival in Yokohama". Assuming that the sound data is selected as a part of link data candidates, the link data candidate exhibiting unit 203 exhibits the candidates as shown in Fig. 11. To the link data candidates obtained respectively from text analysis, sound analysis and user's use information, a predetermined rule, e.g., giving priority in order of sound analysis, text analysis, and user information, may be applied. The example of link ID 006 in Fig. 19 shows a case where sound data is selected as link data. In this example, the content of the link is not the sound data itself, but the location where the sound data exists (file: "jazz.au") is stored.

As is apparent from the above description, in a case where an HTML document includes a link to sound data, the sound data is exhibited to a user as a link data candidate, and when the user selects the sound data as link data, the location where the sound data exists is registered as link data in association with the path data of the HTML document. In this manner, according to the third embodiment, link data can be set by sound data, and highly functional data access means can be generated.

### [Fourth Embodiment]

Although the above-described first to third embodiments have described a case where hyper link data of a URL is an HTML document, hyper link data is not limited to this. The present invention can similarly be applied to data such as XHTML, CHTML, XML and so forth.

### [Fifth Embodiment]

Although the above-described first to fourth embodiments have described a case where the data access path is a URL, the path is not limited to a URL, but may be a file stored in a computer or an information technology device. In a case of a file also, it is possible to perform data registration in the similar manner to that of a URL.

### [Sixth Embodiment]

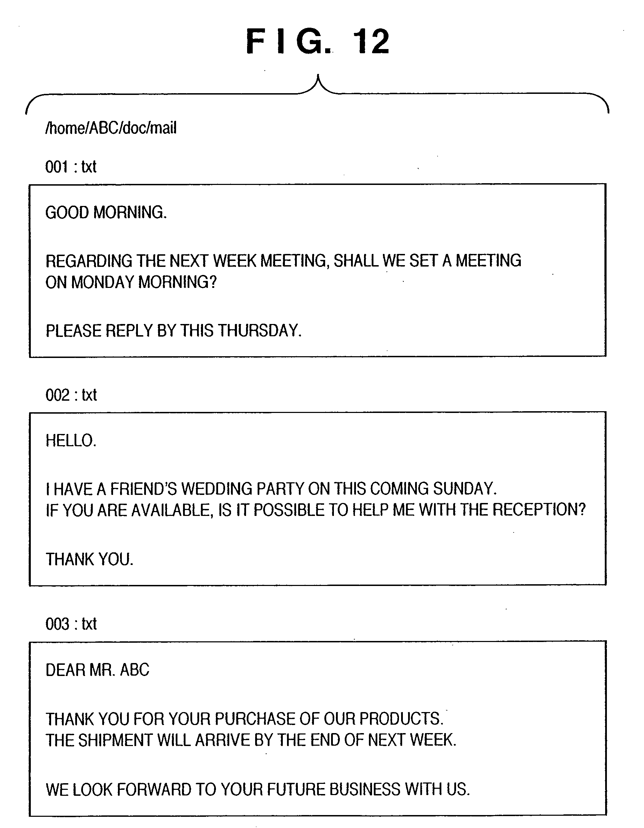

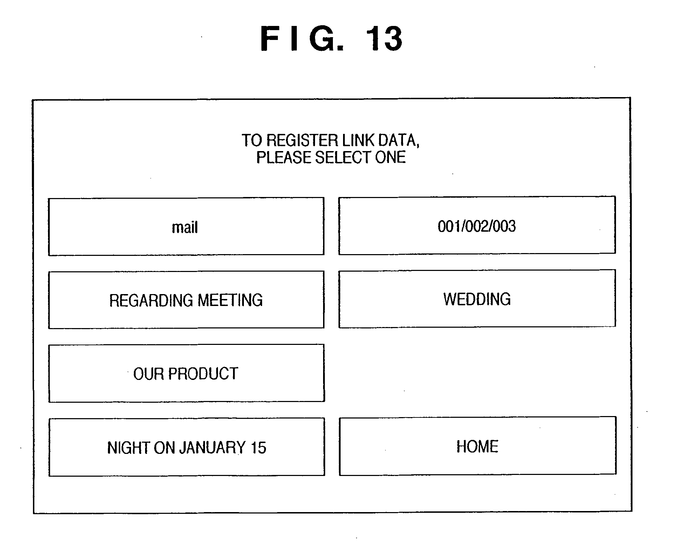

Although the above-described first to fifth embodiments have described a case where the data access path is a URL or a file, the path is not limited to this, but may be a directory (folder) stored in a computer or an information technology device. In this case, a link data candidate is generated from one or any arbitrary combination of a directory name, a file name stored in a directory, a file content, and a directory name. An example of a directory and a file included in the directory is shown in Fig. 12; and an example of link data candidates exhibited to a user, which are generated based on the directory and file is shown in Fig. 13.

In the example shown in Fig. 12, the directory name is "/home/ABC/doc/mail" and the directory includes three text files "001.txt", "002.txt", and "003.txt". For instance, if link data candidates are generated using the word at the end of the directory name (mail), file names excluding extensions combined with separators (/), a phrase of keywords in each text, an access date and time, and an access place, link data candidates shown in Fig. 13 are exhibited. Even if a file included in the directory is an image file, a sound file, a structured file integrating the above, or a multi-media document, data registration can be performed in the similar manner to the method described in the first to fourth embodiments.

### [Seventh Embodiment]

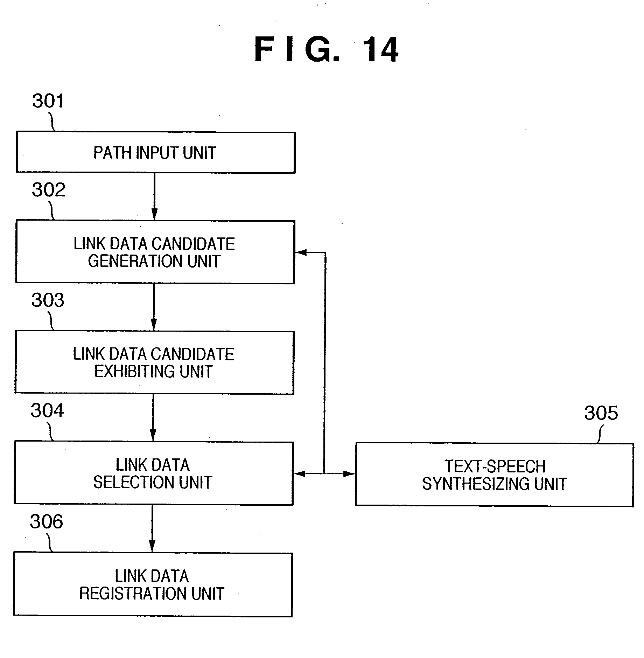

In the above-described embodiments, the link data candidate obtained as a text is a character string displayed as a text to a user. However, by generating how-to-read data and accent data for speech synthesis, it is possible to perform speech output at the time of exhibiting the link data candidates by the link data candidate exhibiting unit 203, at the time of recognizing a selection designation by the link data selection unit 204, at the time of exhibition by the registered link data exhibiting unit 501, and at the time of recognizing a selection designation by the registered link data selection unit 502. Fig. 14 is a block diagram showing a case of obtaining how-to-read data with respect to a link data candidate text by employing a text-speech synthesizing function at the time of generating link data candidates, and then outputting speech synthesis data at the time of exhibiting link data candidates and selecting link data.

Numerals 301 to 304 perform the similar operation as 201 to 204 in Fig. 2. Numeral 305 denotes a text-speech synthesizing unit which outputs data necessary for the speech synthesis, e.g., how-to-read data, accent data and the like, with respect to the texts of the link data candidates generated by the link data candidate generating unit 302. Using these data, the text-speech synthesizing unit 305 can generate synthesized speech data to be outputted from a speaker or the like at the time of exhibition by the link data candidate exhibiting unit 303 or at the time of selection designation recognition by the link data selection unit 304.

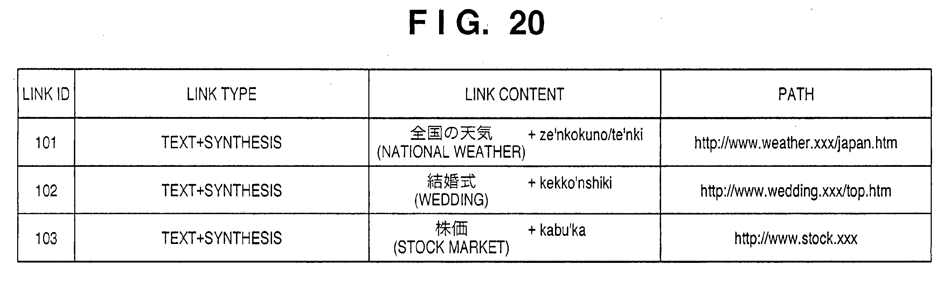

Fig. 20 shows an example of link data and a data content of the path when speech synthesis is performed at the time of link data selection. When the link type is "text + synthesis", the link content stores the link data 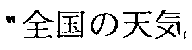 (national weather) + ze'nkokuno/te'nki" that is a pair of text data and speech synthesis data, including how-to-read data and accent data. Note that "+" indicates a combine symbol, "/" indicates segmentation of a basic block, and "'" indicates an accent symbol. Note that the how-to-read data and accent data automatically outputted by the text-speech synthesizing unit 305 may be changed in accordance with user's preference. If the change made is unnecessary or impossible, it is not always necessary to output how-to-read data.

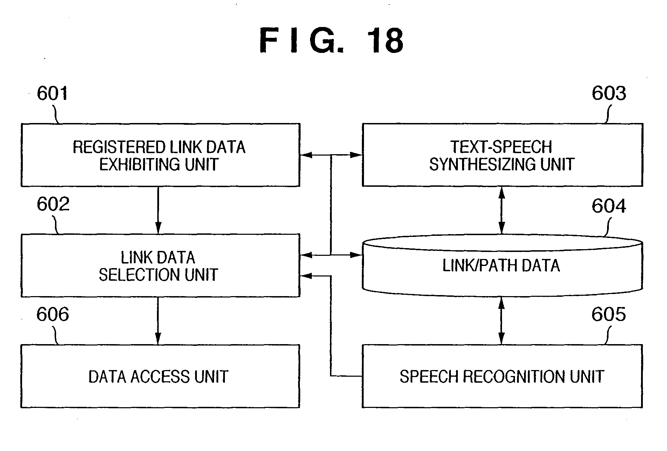

Fig. 18 is a block diagram for performing data access using a speech synthesizing function (the speech recognition unit 605 will be described later). Numerals 601, 602, 604 and 606 perform the similar operation as 501 to 504 in Fig. 16. By employing the link data for speech synthesis stored in the storage 604, it is possible to exhibit link data to a user by synthesized speech at the time of exhibition by the registered link data exhibiting unit 601 or at the time of selection designation recognition by the link data selection unit 602.

### [Eighth Embodiment]

In the above-described embodiments, the link data candidate obtained as a text is a character string displayed as a text to a user. However, by generating a character string and how-to-read data for speech recognition, it is possible to input path using speech recognition at the time of selection designation recognition by the link data selection unit 204 or at the time of selection designation recognition by the registered link data selection unit 502.

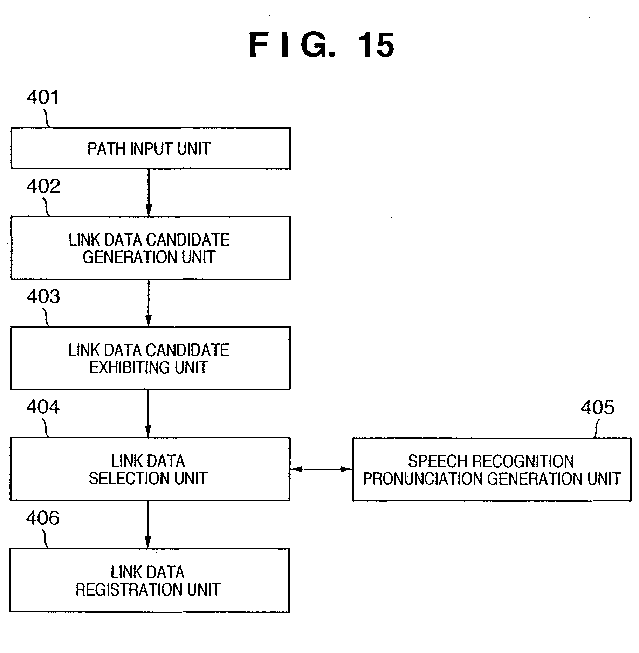

Fig. 15 is a block diagram showing a case of obtaining data necessary for speech recognition, such as a character string, how-to-read data and the like, with respect to a text of a link data candidate at the time of link data candidate generation. Numerals 401 to 404 perform the similar operation as 201 to 204 in Fig. 2. Numeral 405 denotes a speech recognition pronunciation generating unit which outputs necessary data for speech recognition, such as a character string, how-to-read data and the like, with respect to the text of the link data candidate generated by the link data candidate generation unit 402. Note that these data may be exhibited to a user by the link data candidate exhibiting unit 403, or a speech recognition unit may be further provided to confirm that the speech recognition is properly operated at the time of selection designation recognition by the link data selection unit 404, or if necessary, the data outputted by the speech recognition pronunciation generation unit 405 may be changed.

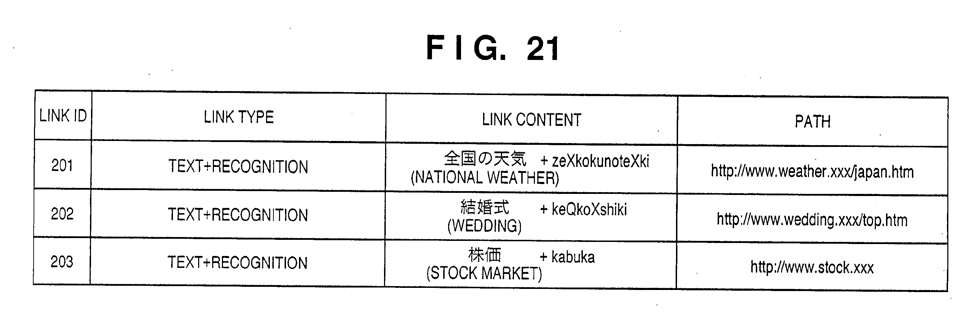

Fig. 21 shows an example of link data and a data content of the path at the time of selecting link data by speech recognition. When the link type is "text + recognition", the link content stores the link data 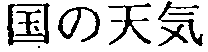 (national weather) + zeXkokunoteXki" that is a pair of text data and how-to-read data necessary for speech recognition. Note that "+" indicates a combine symbol. Fig. 18 is a block diagram for performing data access using the speech recognition function (speech synthesizing unit 603 has been described above). Herein, the registered link data exhibiting unit 601, link data selection unit 602, link/path data 604, and data access unit 606 perform the similar operation as 501 to 504 in Fig. 16. By employing the link data stored in the link/path data storage 604 for speech recognition, it is possible to input a desired path using speech recognition at the time of link data selection by the link data selection unit 602.

### [Ninth Embodiment]

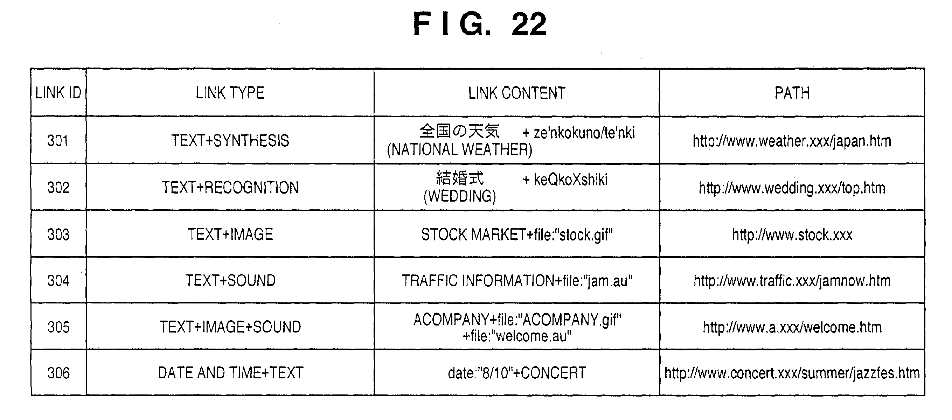

The link types employed in the above-described embodiments include text, image, sound, time, position, synthesis, and recognition. By arbitrarily combining these data, it is possible to generate link data candidates. Fig. 22 shows an example of link data having various link types and a data content of the path. The way of combination is not limited to the one shown in Fig. 22. Besides this, for instance, the link type "text+synthesis+recognition" enables a user to confirm link data by both image displaying and speech outputting, and enables path input by speech.

### [Tenth Embodiment]

In the above-described embodiments, link data selected by a user is registered. In this stage, there may be a case that the same or similar link information as the selected link data already exists. In such case, this link data can be excluded from the candidates at the time of link data candidate generation, or additional data for informing the user can be generated.

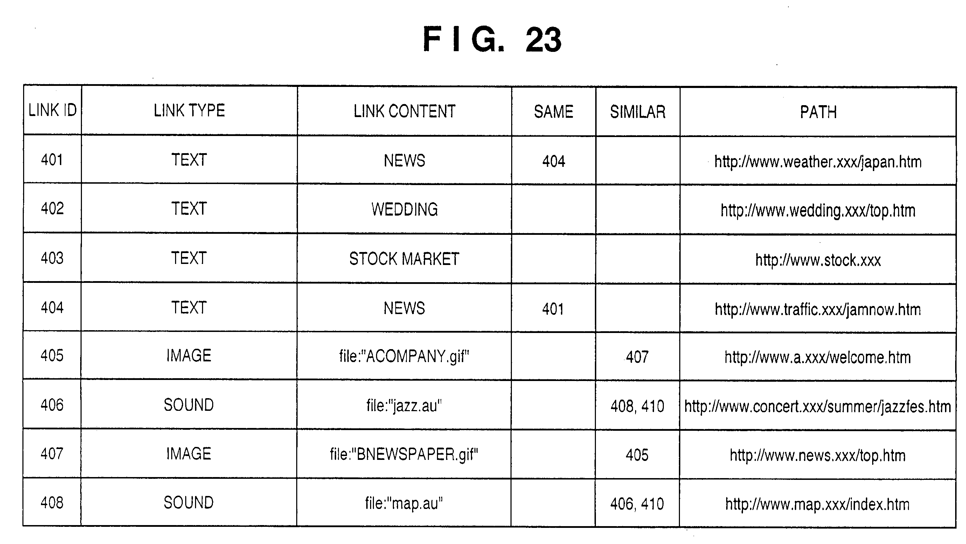

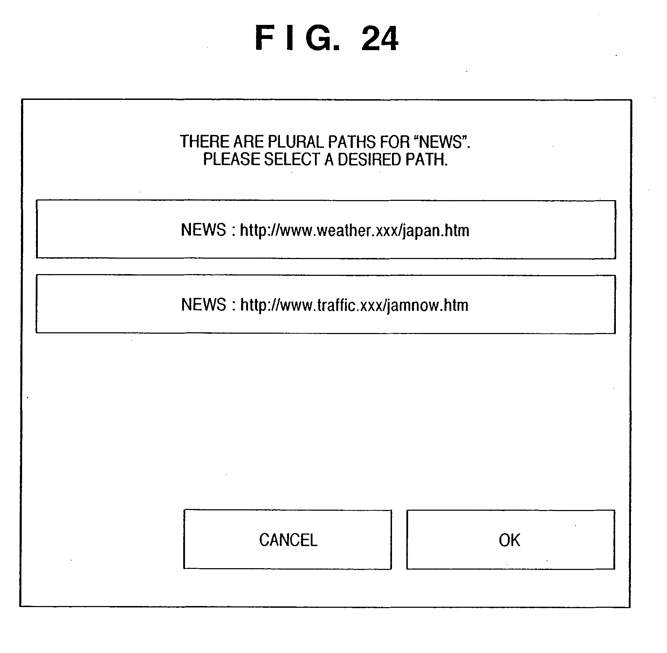

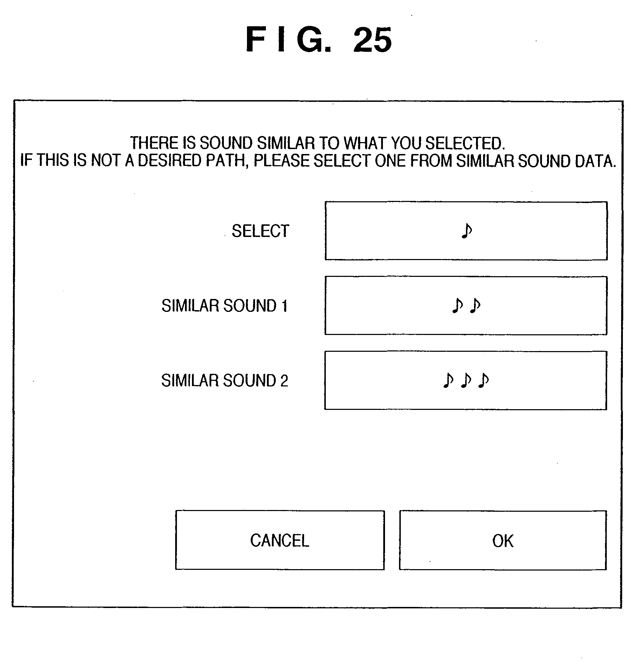

Fig. 23 shows an example of link data having the same or similar information and a data content of the path. In this example, the fourth and fifth columns of the table respectively store link IDs of the same or similar link data as the same link information and similar link information. Fig. 24 shows an example of how to exhibit link data to a user when the user selects link data having the same information. Fig. 25 shows an example of how to exhibit link data to a user when the user selects link data having similar information. Note that determination of the same or similar information is realized by DP matching in the character-string level in the case of text data, or by performing image/sound similarity determination in a case of image or sound data.

### [Eleventh Embodiment]

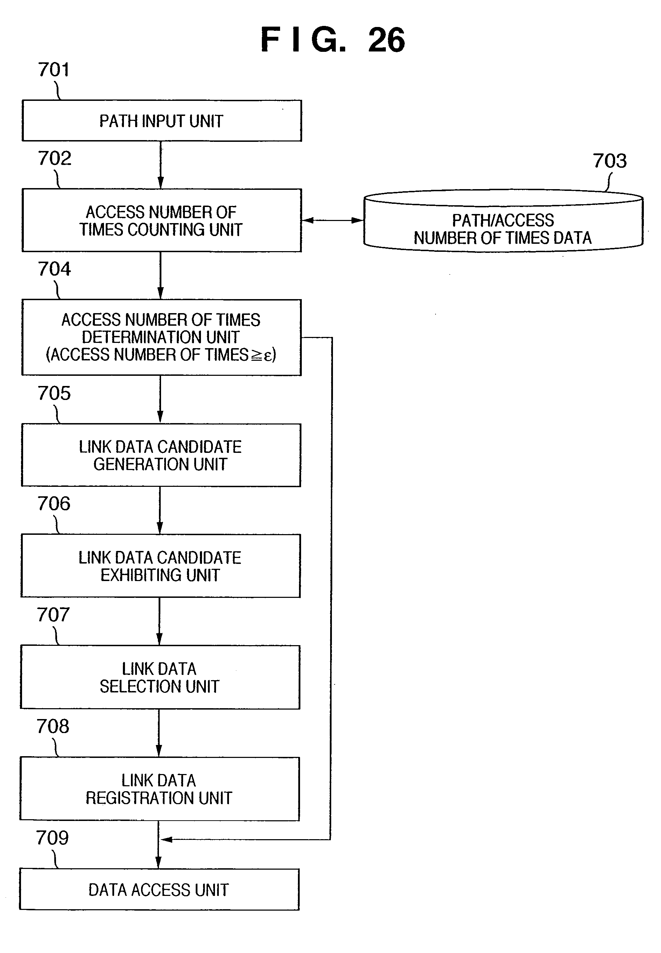

In the above-described embodiments, link data candidates are generated in response to path input and then user selection is made. However, it is possible to count the number of times of access to a path and the processing subsequent to the link data candidate generation can be performed when the number of times of access to a path exceeds a predetermined number of times. Fig. 26 shows a block diagram for performing data registration in a case where a path is accessed a predetermined number of times or more.

When a path is inputted by a user in the path input unit 701, a path/access number of times data 703 is referred to and the counter counting the number of times of access for the path inputted by the path input unit 701 is incremented by one. When an access number of times determination unit 704 determines that the number of times of access exceeds a predetermined number of times ε, processing from the link data candidate generation unit 705 to the link data registration unit 708 is performed. If an access number of times is less than the predetermined number of times ε, link data registration processing is not performed, and the control proceeds to processing by a data access unit 709. For the predetermined number of times ε, an individual value may be set by a user for each path or path category, or the counter increment may be changed in accordance with an interval (difference in period of time) of an access for one same path, or the access number of times data stored in the path/access number of times data 703 may be reset or reduced in accordance with the interval (difference in period of time).

### [Other Embodiment]

Further, the object of the present invention can also be achieved by providing a storage medium, storing program codes of software realizing the above-described functions of the embodiments, to a computer system or apparatus, reading the program codes, by a computer (CPU or MPU) of the computer system or apparatus, from the storage medium, then executing the program.

In this case, the program codes read from the storage medium realize the functions according to the embodiments, and the storage medium storing the program codes constitutes the invention. The storage medium, such as a floppy (registered trademark) disk, hard disk, an optical disk, a magneto-optical disk, CD-ROM, CD-R, a magnetic tape, a non-volatile type memory card, and ROM can be used for providing the program codes.

Furthermore, besides aforesaid functions according to the above embodiments are realized by executing the program codes which are read by a computer, the present invention includes a case where an OS (operating system) or the like working on the computer performs a part or the entire processes in accordance with designations of the program codes and realizes functions according to the above embodiments.

Furthermore, the present invention also includes a case where, after the program codes read from the storage medium are written in a function expansion card which is inserted into the computer or in a memory provided in a function expansion unit which is connected to the computer, a CPU or the like contained in the function expansion card or unit performs a part or the entire processes in accordance with designations of the program codes and realizes functions of the above embodiments.

The present invention is not limited to the above embodiment and various changes and modifications can be made within the spirit and scope of the present invention. Therefore, to apprise the public of the scope of the present invention, the following claims are made.

## Claims

1. A data processing method of registering a path for data access and link data for the path, **characterized by** comprising:
a link data candidate generation step of generating a link data candidate based on an object accessed from the inputted path for data access;
a display control step of controlling to display the generated link data candidate; and
a registration step of registering link data, selected from the displayed link data candidate, in association with the path of the accessed object.

2. A data processing method of registering a path for data access and link data for the path, **characterized by** comprising:
a link data candidate generation step of generating a link data candidate based on information indicative of a state at which a predetermined object is accessed from the inputted path for data access;
a display control step of controlling to display the generated link data candidate; and
a registration step of registering link data, selected from the displayed link data candidate, in association with the path of the accessed object.

3. The data processing method according to claim 1 or 2, **characterized in that** the path for data access is a path for a URL, a file, or a directory.

4. The data processing method according to claim 1 or 2, **characterized in that** the link data candidate is constructed with one of or any arbitrary combination of a character string described in the accessed object, image data associated with the accessed object, speech data, how-to-read data for speech synthesis, and pronunciation data for speech recognition.

5. The data processing method according to claim 3, **characterized in that** in a case where the path for data access is a URL, the object represents a content, and
in said link data candidate generation step, a content of an HTML file, XHTML file, CHTML file, or XML file accessed from the URL is analyzed, and a character string included in the content is extracted to generate the link data candidate.

6. The data processing method according to claim 3, **characterized in that** in a case where the path for data access is a URL, the object represents a content, and
in said link data candidate generation step, a content of an HTML file, XHTML file, CHTML file, or XML file accessed from the URL is analyzed, and image data included in the content or a file name of image data linked to the content is extracted to generate the link data candidate.

7. The data processing method according to claim 3, **characterized in that** in a case where the path for data access is a URL, the object represents a content, and
in said link data candidate generation step, a content of an HTML file, XHTML file, CHTML file, or XML file accessed from the URL is analyzed, and sound data included in the content or a file name of sound data linked to the content is extracted to generate the link data candidate.

8. The data processing method according to claim 3, **characterized in that** in a case where the path for data access designates a predetermined file, the object represents the file, and
in said link data candidate generation step, the file accessed from the path is analyzed, and a character string included in the file is extracted to generate the link data candidate.

9. The data processing method according to claim 3, **characterized in that** in a case where the path for data access designates a predetermined file, the object represents the file, and
in said link data candidate generation step, the file accessed from the path is analyzed, and image data included in the file or a file name of image data linked to the file is extracted to generate the link data candidate.

10. The data processing method according to claim 3, **characterized in that** in a case where the path for data access designates a predetermined file, the object represents the file, and
in said link data candidate generation step, the file accessed from the path is analyzed, and sound data included in the file or a file name of sound data linked to the file is extracted to generate the link data candidate.

11. The data processing method according to claim 3, **characterized in that** in a case where the path for data access designates a predetermined directory, the object represents the directory or a file included in the directory, and
in said link data candidate generation step, the link data candidate is generated from one of or any combination of a name of the directory, a file name included in the directory, a content of a file included in the directory, and a directory name included in the directory.

12. The data processing method according to claim 2, **characterized in that** the information indicative of a state at which a predetermined object is accessed is one of or any combination of an accessed date, time, a time period, an accessed place, and an access user's ID.

13. The data processing method according to claim 5 or 8, **characterized in that** in said registration step, among character strings extracted in said link data candidate generation step, data regarding speech synthesis for a character string recognized in said recognition step is registered in association with the character string.

14. The data processing method according to claim 1, **characterized in that** in said display step, in a case where a link data candidate generated in said link data candidate generation step is link data already registered in said registration step, the link data candidate is not displayed.

15. The data processing method according to claim 1 or 2, **characterized by** further comprising a count step of counting the number of times of access to the path; **characterized in that** said link data candidate generation step generates the link data candidate in case that the number of times of access to the same path exceeds a predetermined number of times.

16. A data processing apparatus for registering a path for data access and link data for the path, **characterized by** comprising:
link data candidate generation unit configured to generate a link data candidate based on an object accessed from the inputted path for data access;
display control unit configured to control to display the generated link data candidate; and
registration unit configured to register link data, selected from the displayed link data candidate, in association with the path of the accessed object.

17. A data processing apparatus for registering a path for data access and link data for the path, **characterized by** comprising:
link data candidate generation unit configured to generate a link data candidate based on information indicative of a state at which a predetermined object is accessed from the inputted path for data access;
display control unit configured to control to display the generated link data candidate; and
registration unit configured to register link data, selected from the displayed link data candidate, in association with the path of the accessed object.

18. A data processing apparatus for registering a path for data access and link data for the path, the apparatus comprising:
means for receiving data relating to an object to be accessed from the input path;
means for processing the data relating to the object to generate a plurality of link candidates;
means for outputting the plurality of link candidates to the user;
means for receiving a user input selecting one of the plurality of link candidates; and
means for registering link data corresponding to the selected link candidate, in association with the path of the object.

19. A storage medium storing a control program which causes a computer to realise the data processing method described in any one of claims 1 to 15.

20. A control program which causes a computer to realise the data processing method described in any one of claims 1 to 15.
